# EUROPEAN PATENT APPLICATION

(11) **EP 0 567 350 A1**
(43) Date of publication of application: **27.10.1993**
(21) Application number: 93303217.9
(22) Date of filing: 23.04.1993
(51) Int. Cl.: B64C 3/38, B64C 19/00

(54) **Improved control system**

(71) Applicant: Venton-Walters, Roy, Alltami, Near Mold, Clwyd CH7 6RW (GB)
(72) Inventor: Venton-Walters, Roy, Alltami, Near Mold, Clwyd CH7 6RW (GB)

(57) **Abstract**

A combined structural and control mechanism which enables the wings (1) or main lifting planes of a light aeroplane of appropriate configuration to be pivoted in the lateral (spanwise) axis together to control pitch and differentially to control roll.

## Description

This invention relates to the control and structure of light aeroplanes.

According to contemporary practice, light aeroplanes are commonly controlled about the roll (longitudinal) axis by means of hinged aerodynamic control surfaces, known as ailerons, attached to the main planes (the aerodynamic surfaces or wings which in normal level translational flight support the greater portion of the aeroplane's weight). In the pitch (lateral) axis control is usually achieved by similar hinged control surfaces attached to the longitudinal stabilising surfaces such as the tail plane in the case of conventional tractor configurations, or the fore-plane in the case of canard, or "tail-first" layouts. The limitations of these types of hinged aerodynamic control surfaces, especially in respect of roll control is known to those skilled in the art of aircraft design. These can include detrimental aeroelastic interaction with wing's torsional axis, the so called secondary effects of aileron control such as adverse yaw, the decrease in aerodynamic efficiency during control deflection as well as the cost, complexity, weight and maintenance requirements of the mechanism and associated control runs. The latter considerations are especially relevant in respect of aeroplane designs which include detachable wings for ground transportation purposes.

In theory at least, the foregoing design limitations may be overcome mounting the main-planes to the aircraft by means of pivotal attachments that constrain each main-plane semi-span to be angularly displaced about an approximately lateral axis by means of the control inputs of the pilot(s). Thus both main-plane semi-spans may be moved together to change their angular position relative to the aircraft, its stabilising surfaces and relative airflow (hereinafter referred to as "collective" angle of attack change), or the semi-spans moved in opposite angular displacement to each other (hereinafter referred to as differential angle of attack change) to obtain control in the roll axis.

In practice the achievement of these objectives in a piloted light aircraft without power assisted controls is not as obvious as superficial experience of all moving tailplanes or canard surfaces on military aircraft or guided missiles might suggest. This is not only because the controlling forces able to be exerted by a human pilot are quite limited, but because the control force feedback needed to give satisfactory aircraft handling qualities and to keep accelerations within the occupant's and aircraft's capability are well defined and incorporated in international mandatory codes of airworthiness. By the same codes, within limits an aircraft is required to exhibit stable and convergent flying characteristics "stick-free", that is, without the pilot holding the controls. Additionally, and on a very practical note, the size, weight and cost of a conventional bearing assembly capable of supporting the full cantilever loads able to be exerted by a main-plane semi-span exerted a wing root junction of such an aircraft are likely to prove prohibitive.

The primary objectives of the invention are therefore to provide an essentially pivotal mechanism which allows self stabilising main-planes of special design (not described here but assumed for the purpose of this specification) to be positioned by the pilot through a control linkage to give the necessary flight control and pilot feedback, as well as to handle the structural and other requirements of main-plane attachment. Additionally, other attributes to the aircraft's control system may be sought. For example, beneficial variations in main-plane sweep or dihed- ral/anhedral with control input may by added to the essentially pivotal movements of the semi-spans to enhance control or stability, while the ease with which wings may be attached and removed may also be of importance.

According to the present invention, there is provided horizontally and normal to the fuselage longitudinal axis in the area of the main-plane attachment to the fuselage structure, three or more structural cross-members. The two main-planes attach at their root ends to either end of these cross members by means of pivotal joints. The cross-members are arranged such that the bending moments generated at the main-plane roots during operation of the aircraft are resolved into compressive or tensile stresses within each of these structural cross-members. Only one of the cross-members is permitted to react the shear loads generated at the main-planes during operation, and is referred to hereafter as the primary cross-member. The primary cross-member is attached to the fuselage structure. This attachment may be solid or by means of bearings which permit the primary cross-member to swivel within the fuselage structure on its own axis, i.e., an axis set horizontally and normal to the fuselage longitudinal axis. If set in such bearings, the primary cross-member is constrained against axial displacement. The other cross members are not connected directly to the fuselage structure and do not materially contact it within the normal operating range of the mechanism. If the primary cross-member is solidly attached to the fuselage structure, at least two of the other cross-members are indirectly connected to the fuselage structure by at least one each triangulating member having swivel joints at each end, one end being attached in the proximity of that cross-member's attachment to that side's main-plane and the other toward the opposite side of the fuselage, such that a straight line drawn between the effective centre of the swivel joint of the said main-plane semi-span's attachment to the primary cross-member and the effective centre of the said swivel joint attachment of the triangulating member to the primary cross member, lies approximately in line with the said semi-span's differential angle of attack axis. Similarly, if the primary member is attached to the fuselage structure, not solidly, but by means of bearings as described previously, then the same may apply, or, at least two of the other cross-members are indirectly connected to the primary cross-member by at least one each triangulating member having swivel joints at each end, one being attached in the proximity of that cross-member's attachment to that side's main-plane semi-span, and the other to a point on the primary cross-member towards the other side of the fuselage, such that a straight line drawn between the effecti ve centre of the swivel joint of the said main-plane semi-span's attachment to the primary cross-member and the effective centre of the said swivel joint attachment of the triangulating member to the primary cross member, lies approximately in line with the said semi-span's differential angle of attack axis. Alternatively, if the primary member is attached to the fuselage structure, not solidly, but by means of bearings as described previously, then two or more cross-members connecting the opposite side's main planes together are pivotally mounted to the mid-point of the primary cross-member to pivot through a small angular displacement about their mid points on axis normal to their length and normal to the length of the said primary cross member. These pivotal attachments may be offset from the said primary cross-member, while firmly braced to it, and may have facility to accommodate small axial joint movements, or one or both pivotal joints at either end of the cross-members at their attachment to the main-planes may have such facility. In all the foregoing configurations of primary cross-member and other cross-member combinations connecting the two main-plane semi-spans and fuselage structure, there also exists a facility to input control movements of the pilot or pilots to effect collective angle of attack change as well as differential angle of attack change. Depending on the precise loci of the various links forming the geometrical design of any particular installation these pilot inputs will also vary the main-plane sweep and dihedral or anhedral angles. These pilot inputs may be made through one or more control sticks or columns mounted pivotally to the fuselage structure and having a suitable fulcrum arrangement such that two or more link members connect via pivotal joints between control stick or column and suitable points connected to the inboard ends of each main-plane semi-span at points offset from the said main-planes' approximate collective and differential angle of attack change axes. Alternatively, a one piece structure encompassing the function of one of the cross-members other than the primary cross-member, may connect directly to the pivotal fulcrum point on the control stick or column, the geometry of the arrangement constrained to give the appropriate conventional primary control effects, i.e. stick forward nose down; back, nose up; to the right roll right; to the left roll left. In all the foregoing configurations the effective collective and differential angle of attack axes may be set forward of the dynamic centre of pressure of the main-planes, providing, unchecked, a natural pitch down tendency which may be opposed by an adjustable spring or elastic member connected between the fuselage structure and collective angle of attack control mechanism to provide the appropriate "stick force per g" or load factor feed-back to the pilot. Provision may also be made for anti-flutter damping and main plane mass-balance by the obvious application of contemporary methods.

The principle of this invention may be embodied in aeroplanes having a variety of possible layouts of lifting and stabilising surfaces, but has special application to aircraft configurations designed to encompass its benefits. Such a configuration is the negative stagger high separation tandem wing layout, an example of which is depicted in the following description of one possible embodiment of the invention in which:-
Figure 1 shows a plan view of the aeroplane;
Figure 2 shows a side elevation of the aeroplane;
Figure 3 shows a front elevation of the aeroplane;
Figure 4 shows a plan view of the internal mechanism between the main-planes with the main-plane outer skins cut away to show their attachment to the mechanism, and the connections to the forward control stick removed in the interests of clarity;
Figure 5 shows a side view of the internal mechanism between the main-planes complete with a typical double control stick linkage. The main plane profile position is ghosted in;
Figure 6 shows a front view of the internal mechanism between the main-planes, with the lower portion of the control stick linkage removed in the interests of clarity. The position of the main planes is ghosted in;
Figure 7 shows a plan view of the internal mechanism, with the main-planes removed and the connections to the forward control stick removed in the interests of clarity;
Figure 8 shows a side view of the internal mechanism without the main-planes and without the forward control stick and linkage;
Figure 9 shows a front view of the internal mechanism without the main-planes, and with the lower portion of the control stick linkage removed in the interests of clarity;
Figure 10 shows a front view of a variation in the construction of the internal mechanism between the main-planes;
Figure 11 shows a front view of a further possible variation in the construction of the internal mechanism between the main-planes;
Figure 12 shows a front view of a further possible variation in the construction of the internal mechanism between the main-planes;

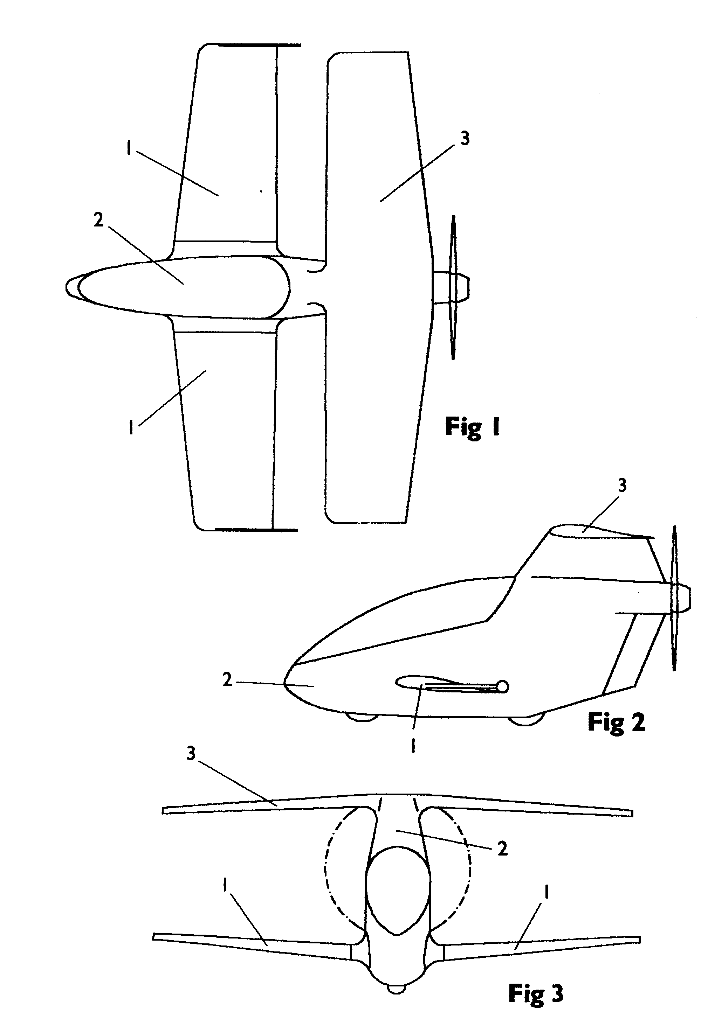

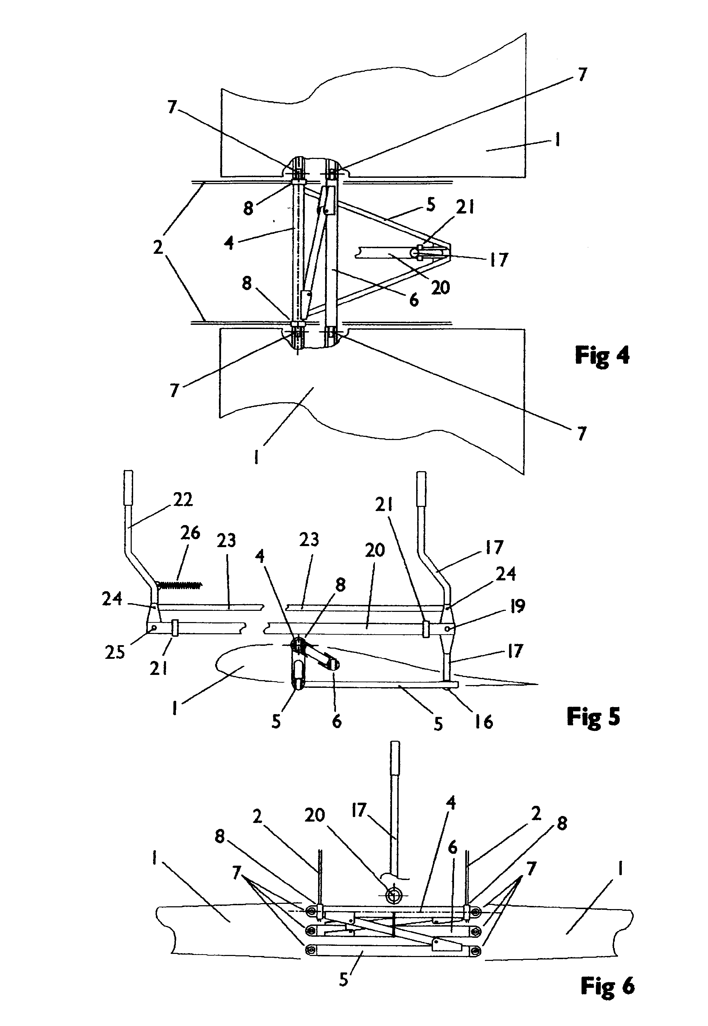

Referring to the drawings, Figures 1, 2 and 3 show the aeroplane where the main-planes or primary lifting surfaces, 1, carry in normal level translational flight approximately 60% of the aircraft's weight, with the secondary lifting planes, 3, carrying the remainder. The main-planes, 1, are attached to the fuselage of the aircraft, 2, by a mechanism that lies internally within the fuselage as shown in Figures 4, 5 and 6.

This mechanism comprises three structural cross member assemblies 4, 5 and 6, which are furnished with spherical joints, 7, at either end at their connection with the main-plane attachment points (typically to a main spar) and which resolve the bending moments imposed at the main plane roots into tensile and compressive stresses in all three cross members, 4, 5 and 6. Cross members 5 and 6 are not materially connected to the fuselage structure and cannot therefore react any shear loads, while cross member 4, the primary cross member, is connected to the fuselage structure, 2, by bearings 8, which permit angular displacement only, and which allow the primary cross-member to react all the shear loads imposed at the wing roots, while leaving the said member free to rotate about its axis through, say, 20 or so degrees, or as required by the actual design geometry.

In the examples depicted, it may be observed that in level translational flight, the primary cross-member, 4, is in compressive and shear loading, whilst cross member 5 is reacting tensile loads between the main planes. Cross member 6 is what may be termed a "drag" member, being in compression at high speeds, and in tension at low speeds and/or high angles of attack.

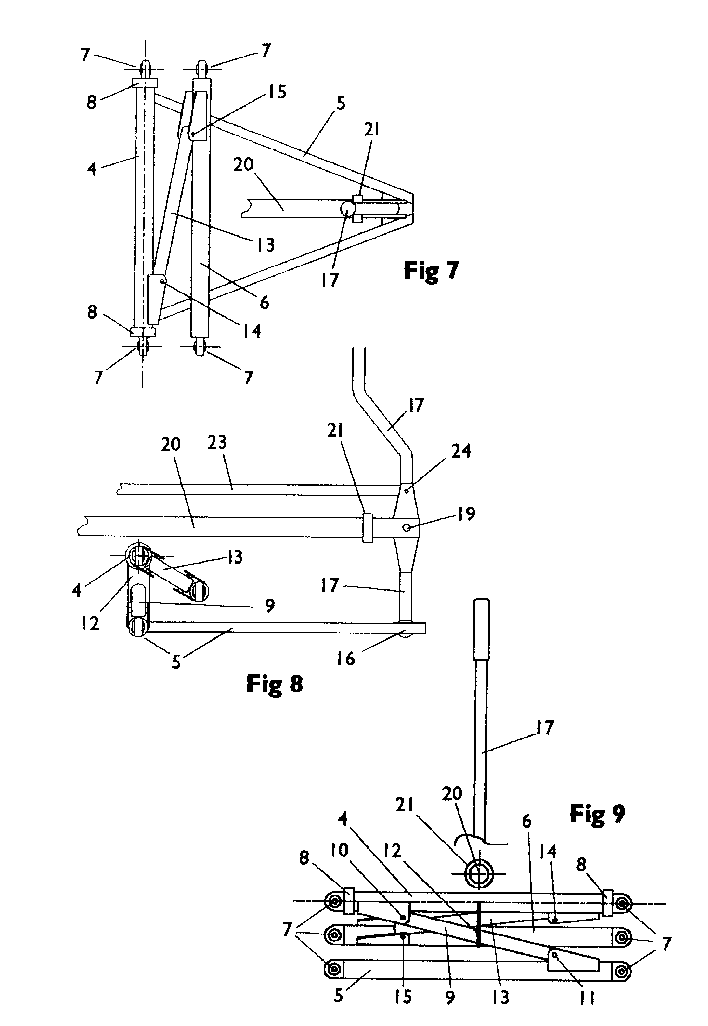

Referring to Figures 7, 8 and 9, for clarity, a triangulating member, 9, attaches the primary cross-member, 4, to the lower cross-member, 5, by means of a pin joint at 10 and a spherical joint at 11. A bracing plate 12, rigidly attached to the primary cross-member, 4, and having a "U" shaped cut-away allowing free clearance for triangulating member, 9, constrains the said member, 9, from imposing unsatisfactory bending moments on pin joint 10. A similar triangulating link, 13, braces the cross member 6, and has spherical joints at both ends at 14 and 15, and no bracing plate (as 12). It should be noted that main plane structure, shown in plan at its attachment to the spherical joints, 7, at the ends of the cross members, 4, 5 and 6, in Figure 4, forms an integral part of the whole triangulated cross-member system.

The lower cross-member, 5, has as an integral part of its construction, a link to a spherical or universal joint, 16, connecting to the lower end of the control stick, 17. The control stick, 17, is mounted pivotally at 19, to torque tube 20, which in turn is mounted in bearings, 21, which allow the said torque tube to move in angular displacement, but prevent axial movement. The outers of bearings, 21, are securely mounted to the fuselage structure (not shown) such that point 19 is the fulcrum point for forward, backward and side control movements of the stick, 17. Referring to Figure 5, and by way of example of the obvious application of contemporary practice, it can be seen that a second control stick, 22, may also be connected to the torque tube 20, by pin joint 25, and by a push-pull rod, 23, pin jointed at a similar position 24 on both sticks. In the configuration of aircraft shown in Figures 1, and 3, the centre of gravity requirements dictate that the preferred position for solo piloting is the front seat of the tandem seating position and control stick, 22 therefore the primary one. The upper portion of control stick 17, above the pin joint 24 is not strictly necessary, except for instruction purposes, and may not be fitted, or may be rendered optionally detachable.

Referring again to Figures 4, 5 and 6, it may be seen that a rearward movement of either control stick will push forward the lower cross-member assembly, 5, through spherical joint 16, by reacting against fulcrum point 19. The two cross-members 4 and 6, and the forward part of cross-member assembly 5, along with both attached main-planes will pivot clockwise as viewed in Figure 5, about the axis of primary cross-member 4, through bearings 8, set in the fuselage structure, 2, causing both main planes to increase their angle of incidence or attack together or collectively. Conversely, a forward control movement will decrease the collective angle of incidence, thus effecting pitch control.

A sideways movement of either control stick will displace the rearward part of cross-member, 5, at spherical joint 16, in the opposite direction by reacting against the fulcrum axis of torque tube 20. This in turn causes the forward part of the said cross member to be displaced angularly in plan view relative to the primary cross-member, 4, such that the spherically jointed attachments of cross-member 5, to the main planes moves rearwards on the side to which the control stick is displaced and forwards on the side opposite to the control stick displacement. The spherically jointed attachments of the three cross-members, 4, 5 and 6, and their triangulating members 9 and 13 permit this movement. Consequently, the angle of incidence of the main plane opposite to the direction of the control stick movement is increased, while the angle of incidence of the main-plane in the direction of the control stick movement is decreased, thus the differential angle of attack change achieving roll control.

In practice required differentially in roll. It may be seen from Figure 8, that the pivotal joint 19, does not have to lie on the axis of torque tube 20, as shown for clarity, but may be set above or below it. Setting the pivot point, 19, above the axis of 20, decreases the differential movement relative to the collective movement as does increasing the distance between the axis of primary cross-member, 4, and spherical joint 16, by increasing the longitudinal length of cross member assembly 5.

The obvious application of pivot and link principles to the geometrical design of the invention reveals further advantages not readily available to contemporary control systems. For example, as with some conventional designs, the gearing in pitch can be arranged such that the same fore and aft displacement of the stick towards the aft stick position can cause a larger movement of the control system than it does in, say, the mid position. However the invention also causes a similar gearing change to occur in the roll axis, so relative pitch and roll inputs remain in proportion with a higher aft stick gearing, a point of significance to the langing approach and landing roll. Also of importance to the is the ability of the invention to permit negative angles of attack of the main planes during the landing roll which is known to significantly reduce landing roll distance.

In normal flight modes, the centre of pressure acting on the main-planes must, be careful design of the said main-planes, remain aft of the pivotal axis of the primary cross-member, 4, to a distance such that the consequent rearward force that would otherwise necessarily applied to the stick to maintain level flight at to the trim speed is equal to the required 'stick force per g'. A spring or elastic member, 26, is attached to the control stick or any other suitable part of the pitch control mechanism at one end and to the airframe or other suitable part of the mechanism at the other, such that an opposite corrective force is automatically applied to maintain the stick in the neutral '1g' position. Thus to achieve load factors above or below 1, the pilot has to apply appropriate pressure to the stick. The attachment of this spring or elastic member may be furnished with provision for tensional adjustment to act as a trim control. It is also important that the main-planes are mass balanced about their pivotal axes. This may be done by balancing the individual centres of gravity of the main-planes themselves or by mass balance weighs set forward of the primary cross-member's axis inside the forward part of the fuselage to apply moments about the said primary cross member's axis by means of suitable moment arms or linkages to the cross members. A geared up linkage to the mass balance weights would probably prove the lightest.

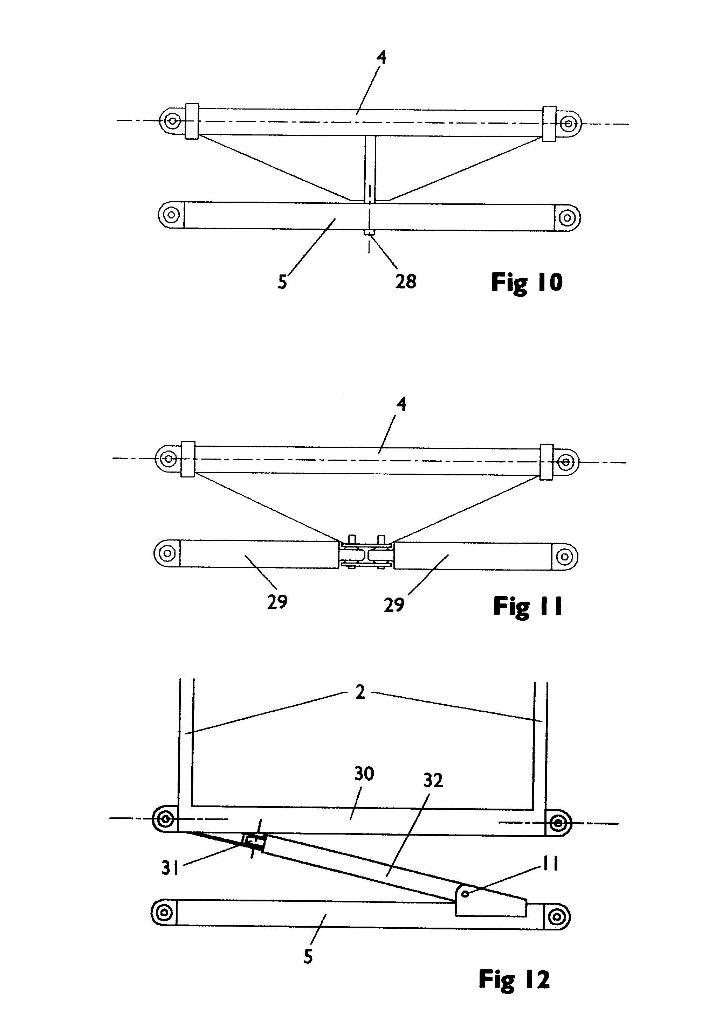

Alternative configurations of the principle of the invention are possible, Figures 10, 11 and 12 showing three of them. Figure 10 shows an alternative form of triangulation of lower cross-member, 5, to the primary cross-member, 4, in which 28 is an offset pin or bearing braced firmly to 4, about which the lower member, 5, may pivot. Provision for a small amount of axial movement is made at pivot 28. The same system may also be used to brace cross member 6.

Figure 11 shows a similar arrangement where cross member, 5, has been replaced by two shorter members, 29, having spherically jointed ends attached to a braced double pivot on primary cross-member 4. Here, three push-pull rods with pivotal or spherical end fittings (not shown) connect the lower end of the control stick respectively to both outer ends of members 29, and to primary cross member 5, in the region of the inner cross member's attachment to it. A similar system, without the connection to the control stick, can be used to replace cross member 6.

Figure 12 shows a variation how a fixed structural cross-member of the fuselage structure, 30, can replace the primary cross-member, 4, where the spherical joints attaching the main-planes permit sufficient displacement to cover the collective pitch movement. Triangulation of cross member, 5, is by means of member 32, being furnished with spherical joints at 31 and 11. The same system may also be used to brace cross member 6.

In the forgoing specification, the position of the two secondary cross-members, 5 and 6, below and to the rear of the primary cross-member, 4, is not necessarily relevant. The secondary cross-members may be positioned in any appropriate position dictated by the specifics of any given design interpretation of the invention. However the positioning of the cross-member, 5, below in more or less the position shown results in a natural control stick convergence to the central position in roll, which is proportional to positive load factor and is of relatively small values in the aircraft configuration example depicted.

With regard to the control stick or column linkages, the invention is amenable to the obvious application of contemporary aeronautical practice in control systems, and may be connected to the pilot(s) inputs existing single, tandem or side by side stick or column, or other systems.

## Claims

1 A mechanism and structure which attaches the main-planes of an aeroplane to its fuselage structure and which allows the semi-spans of the said main-planes to be angularly displaced both collectively and differentially about an approximately lateral (pitch) axis by means of linkages from the pilot's controls to effect control of the aeroplane in the lateral (pitch) axis and in the longitudinal (roll) axis, and which comprises three or more cross members passing from pivotal connections on one semi-span root through the fuselage area to pivotal connections on the other semi-span root such that the primary bending moments atthe semi-span attachments are resolved into mainly compressive and tensile stresses in the said cross members with the exception of only one of the cross members, referred to hereinafter as the primary cross member, which is formed of the fuselage structure or attached to the fuselage structure directly or by means of bearings which permit the said angular displacement but not axial displacement and serves to react the shear loads imposed at the junction of the semi-spans and fuselage, and where two or more of the other members are braced or triangulated to the fuselage structure by means of link struts or ties or webs pivotally connected to the fuselage structure or primary cross-member in such a manner as to react the wing drag or differential rolling loads while constraining the semi-spans to pivot about an approximately lateral axis during differential and collective displacement.

2 A mechanism as claimed in claim 1, where the approximately lateral (pitch) pivotal axes or loci approximating closely to pivotal axes lie in front of the effective centre of pressure of the main planes, such that in level translational flight an otherwise unchecked force equivalent to or exceeding the minimum mandatory "stick force per g" prescribed in relevant codes of airworthiness or necessary for safe operation, would exist as a nose down pull on the hand grip of the pilot's control stick or column, and which may be neutralised as far as pilot feel is concerned by means of a fixed or adjustable force spring or elastomer element connected between any suitable point on the control linkage to a point on the fuselage structure.

3 A mechanism as in claims 1 or 2 and configured substantially as described herein with reference to Figures 4 through to 12.

4 A mechanism for attaching and controlling the movement of the movement of the main-planes of an aeroplane substantially as described herein with reference to Figures 4 through to 12.

5 A mechanism as in claims 1 to 4 in an application to an aeroplane configuration substantially as depicted in Figures 1 to 3 which enable the forward lower wings [1] to controlled in pitch collectively (both semi-spans together in the same direction of angular displacement) to give pitch control and differentially (both semi-spans displaced angularly in opposite directions) to give roll control.
